# EUROPÄISCHE PATENTSCHRIFT

(11) **EP 1 304 510 B1**
(45) Veröffentlichungstag und Bekanntmachung des Hinweises auf die Patenterteilung: **09.04.2008**
(21) Anmeldenummer: 02022823.5
(22) Anmeldetag: 12.10.2002
(51) Int. Cl.: F16H 61/02, F16H 37/06, B60W 30/18, B60W 10/02, B60W 10/06, B60W 10/10

(54) **Verfahren zur Steuerung eines Doppelkupplungsgetriebes**
Method for controlling a dual clutch transmission
Procédé de commande d'une transmission à deux embrayages

(30) Priorität: 17.10.2001 DE 10151260
(43) Veröffentlichungstag der Anmeldung: 23.04.2003
(73) Patentinhaber: ZF FRIEDRICHSHAFEN Aktiengesellschaft, 88038 Friedrichshafen (DE)
(72) Erfinder: Gierling, Armin, 88085 Langenargen (DE); Paul, Andreas, 88045 Friedrichshafen (DE)

(56) Entgegenhaltungen:
- EP-A- 0 129 341
- EP-A- 0 478 945
- DE-A1- 19 939 334

## Beschreibung

Die Erfindung betrifft ein Verfahren zur Steuerung eines Doppelkupplungsgetriebes nach dem Oberbegriff des Hauptanspruchs.

Bei Doppelkupplungsgetrieben handelt es sich um eine spezielle Bauform von automatisierten Schaltgetrieben mit zwei Teilgetrieben. Bei herkömmlichen automatisierten Schaltgetrieben, die in der Regel als Vorgelegegetriebe ausgebildet sind, besteht der Nachteil, dass sämtliche Schaltungen mit einer Zugkraftunterbrechung einhergehen. Insbesondere bei Hochschaltungen und bei höheren Zugkraftniveaus wirkt die Zugkraftunterbrechung komfortmindernd. Es sind daher verschiedene Überlegungen im Gange, wie die Zugkraftunterbrechung verhindert oder abgemildert werden kann. So sind z. B. Ansätze bekannt, mit Hilfe eines Starter-Generator-Elektromotors anzutreiben, während der Antriebsmotor durch eine Trennkupplung während des Gangstufenwechsels vom Getriebeeingang getrennt ist.

Bei einem Doppelkupplungsgetriebe sind zwei Teilgetriebe vorgesehen, wobei ein erstes Teilgetriebe durch eine erste Kupplung und ein zweites Teilgetriebe durch eine zweite Kupplung trieblich mit dem Antriebsmotor koppelbar sind. Jedes Teilgetriebe ist Teil eines getrennten Leistungszweigs. Beide Leistungszweige werden auf einen gemeinsamen Abtrieb zusammengeführt. Jedes Teilgetriebe weist mehrere, wahlweise schaltbare Räderpaare bzw. Übersetzungsstufen auf. Die Übersetzungsstufen beider Teilgetriebe sind so aufeinander abgestimmt, dass zwei aufeinanderfolgende Gangstufen nicht dem selben Teilgetriebe zugeordnet sind. Während eine Gangstufe stationär eingelegt ist, ist nur diejenige Kupplung an der Drehmomentübertragung beteiligt, welche dem Teilgetriebe zugeordnet ist, welches diese Gangstufe umfaßt. Während also ein Radpaar dieses Teilgetriebes ein Drehmoment überträgt, sind die Radpaare des anderen Teilgetriebes drehmomentfrei, so dass dort das Radpaar der voraussichtlich als nächstes eingelegten Gangstufe durch entsprechende Schaltelemente in Eingriff gebracht werden kann. Der eigentliche Gangstufenwechsel erfolgt, indem die Kupplung des einen Teilgetriebes gelöst und die Kupplung des anderen Teilgetriebes geschlossen wird. Während einer Überschneidungsphase sind also für kurze Zeit beide Kupplungen schleifend an der Drehmomentübertragung beteiligt, so dass der Gangstufenwechsel zugkraftunterbrechungsfrei erfolgt.

In bestimmten Fahrsituationen ist es erforderlich, sehr schnell die maximale mögliche Zugkraft zur Verfügung zu stellen. Ist eine der höchsten Gangstufen eingelegt, kann die maximale Zugkraft in vielen Fällen nur dadurch bereitgestellt werden, dass um zwei Gangstufen zurückgeschaltet wird. Bei bekannten Doppelkupplungsgetrieben werden in diesem Fall zwei Einfachrückschaltungen nacheinander ausgeführt. Bis tatsächlich die gewünschte Gangstufe eingelegt ist, verstreicht eine als zu lang empfundene Zeit, in der eine Zwischengangstufe ein- und gleich darauf wieder ausgelegt wird. Außerdem erfolgt unter Umständen eine erhöhte Belastung der Kupplungen und der Schaltelemente.

Aus der DE 198 53 824 A1, das die Merkmale des Oberbegriffs des Anspruchs 1 zeigt, ist ein Doppelkupplungsgetriebe bekannt, bei dem ein Gangstufenwechsel von der zweithöchsten in die höchste Gangstufe innerhalb desselben Teilgetriebes möglich ist. Die hierbei auftretende Zugkraftunterbrechung kann aufgrund des geringen Zugkraftniveaus in den höchsten Gängen toleriert werden. Das dort offenbarte Verfahren ist jedoch nicht dafür vorgesehen und geeignet, dem Fahrer auf eine Zugkraftanforderung möglichst schnell die maximale Zugkraft zur Verfügung zu stellen und damit die Spontaneität des Fahrzeugs auf eine Zugkraftanforderung zu erhöhen.

Der Erfindung liegt daher die Aufgabe zugrunde, ein Verfahren zur Steuerung eines doppelten Gangstufenwechsels bei einem Fahrzeug mit einem Doppelkupplungsgetriebe anzugeben, bei welchem die maximale Fahrleistung sehr schnell bereitgestellt wird und bei dem hohe Belastungen der Kupplungs- bzw. Schaltelemente vermieden werden.

Erfindungsgemäß wird diese Aufgabe durch ein auch die Merkmale des kennzeichnenden Teils des Hauptanspruchs aufweisendes Verfahren gelöst.

Erfindungsgemäß erfolgt also auf eine Anforderung einer Doppelrückschaltung ein Gangstufenwechsel innerhalb desselben Teilgetriebes, ohne dass während des Gangstufenwechsels das andere Teilgetriebe ein Drehmoment vom Antriebsmotor auf den Abtrieb überträgt. Hierdurch kann das am Antriebsmotor während des Gangstufenwechsels abgegebene Drehmoment im wesentlichen zum Beschleunigen von antriebsmotorseitigen Drehmassen verwendet werden und der Antriebsmotor dreht innerhalb sehr kurzer Zeit mit einer hohen Drehzahl. Bisher wurde diese Art des Gangwechsels beim Doppelkupplungsgetriebe aufgrund der damit einhergehenden Zugkraftunterbrechung aus Komfortgründen bewußt vermieden. Überraschenderweise wird jedoch die Zugkraftunterbrechung an dieser Stelle nicht, wie allgemein angenommen, als sehr störend empfunden. Im Gegensatz zu einer Einfachrückschaltung oder einer -hochschaltung bestimmt der Fahrer durch ein sehr schnelles Niedertreten des Fahrpedals bewußt den Zeitpunkt der Doppelrückschaltung, so dass er auf die kurze Zugkraftunterbrechung gefaßt sein kann. Zudem fordert der Fahrer durch das schnelle Niedertreten des Fahrpedals bewußt eine sehr dynamische Fahrzeugreaktion, wobei die kurze Zugkraftunterbrechung zusammen mit dem schnellen Motordrehzahlhochlauf als "sportlich" empfunden wird.

In einer vorteilhaften Ausgestaltung der Erfindung ist die Kupplung des Teilgetriebes, innerhalb dessen die Doppelrückschaltung erfolgt, während des Gangstufenwechsels geöffnet und wird erst wieder geschlossen, nachdem der Gangstufenwechsel innerhalb des Teilgetriebes abgeschlossen ist. Hierdurch wird ermöglicht, dass der Antriebsmotor während des Gangstufenwechsels unter Last betrieben wird, so dass zum Zeitpunkt, wenn der Gangstufenwechsel innerhalb des Teilgetriebes abgeschlossen ist, eine antriebsmotorseitige Hälfte der Kupplung mindestens dieselbe Drehzahl wie eine teilgetriebeseitige Hälfte der Kupplung aufweist.

Aufgrund der hohen Drehzahl-Gradienten und des schnellen Schaltablaufs kann es vorteilhaft sein, zur Steuerung bzw. Regelung der Motordrehzahl während des Gangstufenwechsels eine spezielle Motoreingriffsfunktion vorzusehen, welche den Antriebsmotor derart ansteuert, dass in einer ersten Phase des Gangstufenwechsels ein sehr schneller Drehzahlanstieg erfolgt.

Anhand der beigefügten schematischen Darstellung eines Antriebs mit einem Doppelkupplungsgetriebe wird die Erfindung näher erläutert.

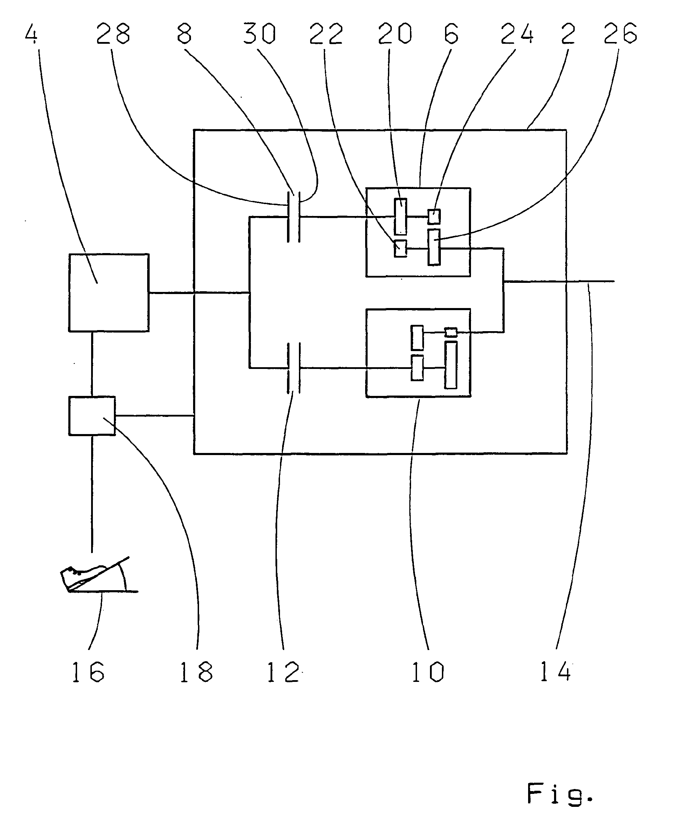

In der Figur ist mit 2 ein Doppelkupplungsgetriebe bezeichnet, welches von einem Antriebsmotor 4 antreibbar ist. Das Doppelkupplungsgetriebe 2 umfaßt ein erstes Teilgetriebe 6, welches durch eine erste Kupplung 8 trieblich mit dem Antriebsmotor 4 koppelbar ist. Ein zweites Teilgetriebe 10 ist durch die zweite Kupplung 12 ebenfalls trieblich mit dem Antriebsmotor koppelbar. Beide Teilgetriebe 6, 10 weisen einen gemeinsamen Abtrieb 14 auf.

Für die Beschreibung der Erfindung spielt es keine Rolle, wie die beiden Teilgetriebe im Doppelkupplungsgetriebe angeordnet sind. In der Praxis sind die erste und die zweite Kupplung häufig koaxial angeordnet.

Jedes der Teilgetriebe 6, 10 weist mehrere Übersetzungsstufen auf. In der Übersetzungsreihe benachbarte Übersetzungsstufen sind nicht dem selben Teilgetriebe zugeordnet, so dass bei jedem einfachen Gangstufenwechsel von einem auf das andere Teilgetriebe geschaltet wird. Eine Doppelrückschaltung kann von einem Fahrer beispielsweise dadurch angefordert werden, dass er das Fahrpedal 16 sehr schnell um einen hohen Betrag niederdrückt. Eine solche Betätigung wird von einer elektronischen Steuerungseinrichtung 18 in einen Befehl zu einer Doppelrückschaltung umgewandelt. Wurde vor der Doppelrückschaltung das Drehmoment vom Antriebsmotor 4 zum Abtrieb 14 über das erste Teilgetriebe 6 und die erste Kupplung 8 übertragen, so wird nun zunächst die Kupplung 8 geöffnet, ohne dass die zweite Kupplung 12 geschlossen wird. Es tritt eine Zugkraftunterbrechung ein und die Drehzahl des Antriebsmotors 4 beginnt zu steigen. Im Teilgetriebe 6 schalten nicht näher dargestellte Schaltelemente ein erstes Radpaar 20, 22 ab und ein zweites Radpaar 24, 26 zu. Sobald diese Umschaltung innerhalb des Teilgetriebes 6 erfolgt ist, wird die erste Kupplung 8 wieder geschlossen. In der Zwischenzeit ist der Antriebsmotor 4 unter Last betrieben worden, so dass die antriebsmotorseitige Hälfte der Hälfte 28 der Kupplung 8 mindestens dieselbe Drehzahl wie die teilgetriebeseitige Hälfte 30 der Kupplung, welche ja über das Radpaar 24, 26 mit dem Abtrieb 14 verbunden ist, aufweist.

### Bezugszeichen

- 2: Doppelkupplungsgetriebe
- 4: Antriebsmotor
- 6: erstes Teilgetriebe
- 8: erste Kupplung
- 10: zweites Teilgetriebe
- 12: zweite Kupplung
- 14: Abtrieb
- 16: Fahrpedal
- 18: Steuerung
- 20, 22: Radpaar
- 24, 26: Radpaar
- 28: Kupplungshälfte
- 30: Kupplungshälfte

## Patentansprüche

1. Verfahren zur Steuerung eines Gangstufenwechsels bei einem Fahrzeug mit einem von einem Antriebsmotor (4) antreibbaren Doppelkupplungsgetriebe (2), mit mehreren Gangstufen, bei welchem ein erstes Teilgetriebe (6) durch eine erste Kupplung (8) und ein zweites Teilgetriebe (10) durch eine zweite Kupplung (12) trieblich mit dem Antriebsmotor (4) koppelbar ist und beide Teilgetriebe (6, 10) einen gemeinsamen Abtrieb (14) aufweisen, wobei jedes Teilgetriebe (6, 10) vorzugsweise mehrere Übersetzungsstufen aufweist und zumindest zwei aufeinanderfolgende Gangstufen des Doppelkupplungsgetriebes (2) nicht dem selben Teilgetriebe (6, 10) zugeordnet sind, **dadurch gekennzeichnet, dass** auf eine Anforderung einer Doppelrückschaltung ein Gangstufenwechsel innerhalb desselben Teilgetriebes (6) erfolgt, ohne dass während des Gangstufenwechsels das andere Teilgetriebe (10) ein Drehmoment vom Antriebsmotor (4) auf den Abtrieb (14) überträgt, und dass das vom Antriebsmotor (4) während des Gangstufenwechsels abgegebene Drehmoment im wesentlichen zum Beschleunigen von antriebsmotorseitigen Drehmassen verwendet wird.

2. Verfahren nach Anspruch 1, **dadurch gekennzeichnet, dass** die Kupplung (8) des Teilgetriebes, innerhalb dessen die Doppelrückschaltung erfolgt, während des Gangstufenwechsels geöffnet ist und erst wieder geschlossen wird, nachdem der Gangstufenwechsel innerhalb des Teilgetriebes (6) abgeschlossen ist.

3. Verfahren nach Anspruch 2, **dadurch gekennzeichnet, dass** der Antriebsmotor (4) während des Gangstufenwechsels unter Last betrieben wird, so dass zum Zeitpunkt, wenn der Gangstufenwechsel innerhalb des Teilgetriebes (6) abgeschlossen ist, eine antriebsmotorseitige Hälfte (28) der Kupplung (8) mindestens dieselbe Drehzahl wie eine teilgetriebeseitige Hälfte (30) der Kupplung (8) aufweist.

4. Verfahren nach Anspruch 3, **dadurch gekennzeichnet, dass** zur Steuerung bzw. Regelung der Motordrehzahl während des Gangstufenwechsels in einer Steuerungseinrichtung (18) eine Motoreingriffsfunktion abgelegt ist, welche den Antriebsmotor (4) derart ansteuert, dass in einer ersten Phase des Gangstufenwechsels ein schneller Drehzahlanstieg erfolgt.

## Claims

1. A method for controlling a gearstep change in a vehicle with a dual-clutch transmission(2)drivable by a drive motor (4), with several gearsteps, with a first subtransmission (6) being drivingly connectable by a first clutch (8) and a second subtransmission (10) being drivingly connectable by a second clutch (12) with the drive motor (4), and with both subtransmissions (6, 10) featuring a common output(14), with each subtransmission (6, 10) preferably featuring several gear ratios, and with at least two successive gearsteps of the dual-clutch transmission (2) not being assigned to the same subtransmission (6, 10), **characterized in that** a request for a double downshift is followed by a gearstep change in the same subtransmission (6) without torque from the drive motor (4)being transmitted to the output (14) by the other subtransmission(10)during the gearstep change, and that the torque provided by the drive motor (4) during the gearstep change is chiefly used for acceleration of drive-motor-related rotating masses.

2. A method according to claim 1, **characterized in that** the clutch (8) of the subtransmission performing the double downshift is open during the gearstep change and only closed after completion of the gearstep change within the subtransmission(6).

3. A method according to claim 2, **characterized in that** the drive motor (4) is operated under load during the gearstep change, so that after completion of the gearstep change within the subtransmission, one drive-motor-related halve (28) of the clutch(8) operates at least at the same speed as a subtransmission-related halve (30) of the clutch(8).

4. A method according to claim 3, **characterized in that** for control of the engine speed during the gearstep change, a control device (18)featuring an engine-intervention function is provided, with the drive motor (4) being controlled in such a way that there is a fast increase in speed in a first phase of the gearstep change.

## Revendications

1. Procédé pour commander un changement d'étage de vitesse dans un véhicule automobile comportant une boîte de vitesses à double embrayage (2) pouvant être entraînée par un moteur d'entraînement (4) et comprenant plusieurs étages de vitesse, dans lequel une première boîte de vitesses partielle (6) peut être accouplée cinématiquement au moteur d'entraînement (4) par un premier embrayage (8) et une seconde boîte de vitesses partielle (10) peut y être accouplée cinématiquement par un second embrayage (12), et les deux boîtes de vitesses partielles (6, 10) comportent un organe de sortie commun (14), dans lequel chaque boîte de vitesses partielle (6, 10) comporte de préférence plusieurs étages de rapport de transmission, et au moins deux étages de vitesse consécutifs de la boîte de vitesses à double embrayage (2) ne sont pas associés à la même boîte de vitesses partielle (6, 10), **caractérisé en ce que**, en réponse à une demande de rétrogradage double, un changement d'étage de vitesse a lieu à l'intérieur de la même boîte de vitesses partielle (6) sans que l'autre boîte de vitesses partielle (10) ne transmette un couple du moteur d'entraînement (4) à l'organe de sortie (14) pendant le changement d'étage de vitesse, et **en ce que** le couple développé par le moteur d'entraînement (4) pendant le changement d'étage de vitesse est essentiellement utilisé pour accélérer les masses tournantes liées au moteur d'entraînement.

2. Procédé selon la revendication 1, **caractérisé en ce que** l'embrayage (8) de la boîte de vitesses partielle à l'intérieur de laquelle le rétrogradage double a lieu est ouvert pendant le changement d'étage de vitesse et n'est refermé que lorsque le changement d'étage de vitesse a été achevé à l'intérieur de la boîte de vitesse partielle (6).

3. Procédé selon la revendication 2, **caractérisé en ce que** l'on fait travailler le moteur d'entraînement (4) en charge pendant le changement d'étage de vitesse, de telle manière qu'à l'instant où le changement d'étage de vitesse est achevé à l'intérieur de la boîte de vitesses partielle (6), une moitié côté moteur d'entraînement (28) de l'embrayage (8) possède au moins la même vitesse de rotation qu'une moitié côté boîte de vitesses partielle (30) de l'embrayage (8).

4. Procédé selon la revendication 3, **caractérisé en ce que,** pour la commande ou la régulation de la vitesse de rotation du moteur pendant le changement d'étage de vitesse, il est prévu, enregistrée dans un dispositif de commande (18), une fonction d'intervention sur le moteur qui pilote le moteur d'entraînement (4) de manière qu'il se produise une élévation rapide de la vitesse de rotation dans une première phase du changement d'étage de vitesse.
